# EUROPEAN PATENT APPLICATION

(11) **EP 1 477 707 A1**
(43) Date of publication of application: **17.11.2004**
(21) Application number: 03425315.3
(22) Date of filing: 16.05.2003
(51) Int. Cl.: F16H 25/22, F16J 15/32

(54) **Ball screw**

(71) Applicant: Umbra Cuscinetti S.p.A., 06034 Foligno (IT)
(72) Inventor: Perni, Federico, 06039 Trevi (IT); Pizzoni, Luciano, 06034 Foligno (IT); Pacieri, Francesca, 06049 Foligno (IT); Chiarappa, Marco, 06031 Perugia (IT)
(74) Representative: Jorio, Paolo

(57) **Abstract**

A ball screw has a spiral casing (6) mounted coaxially with a shaft (2); a set of balls interposed between the shaft (2) and the casing (6); and two seals (16) fitted between the shaft (2) and the casing (6) to define, together with the shaft (2) and the casing (6), a chamber (17) for containing lubricant; each seal (16) being defined by an annular member (18) made of a first material having a first coefficient of thermal expansion, and by at least one insert (19) located inside the annular member (18) and made of a second material having a second coefficient of thermal expansion lower than the first coefficient.

## Description

The present invention relates to a ball screw.

More specifically, the present invention relates to a ball screw of the type comprising a shaft having a given longitudinal axis and an external thread; a spiral casing mounted coaxially with the shaft; at least one set of balls interposed between the shaft and casing; and two seals fitted, coaxially with the axis, between the shaft and casing to define, together with the shaft and casing, a chamber for containing lubricant.

The shaft and casing are normally made of metal, whereas the seals are made entirely of plastic material - preferably, though not necessarily, polymer material, in particular polytetrafluoroethylene - and therefore have a higher coefficient of thermal expansion than the shaft and casing.

Since known ball screws of the above type are employed, for example, in aircraft, and must therefore operate at relatively high and low temperatures, they have several drawbacks, mainly due to the different coefficients of thermal expansion of the shaft and casing on the one hand, and the seals on the other.

That is, in relatively low operating temperatures, the seals contract more than the shaft and casing, and therefore shrink onto the shaft; whereas, in relatively high operating temperatures, the seals expand more than the shaft, and may cause lubricant leakage from the chamber.

It is an object of the present invention to provide a ball screw designed to eliminate the aforementioned drawbacks, and which is cheap and easy to produce.

According to the present invention, there is provided a ball screw as claimed in Claim 1.

A non-limiting embodiment of the present invention will be described by way of example with reference to the accompanying drawings, in which:
Figure 1 shows a schematic longitudinal section of a preferred embodiment of the ball screw according to the present invention;
Figure 2 shows a side view of a detail of Figure 1;
Figure 3 shows a section along line III-III in Figure 2;
Figure 4 is similar to Figure 3, and shows a variation of the Figure 2 and 3 detail.

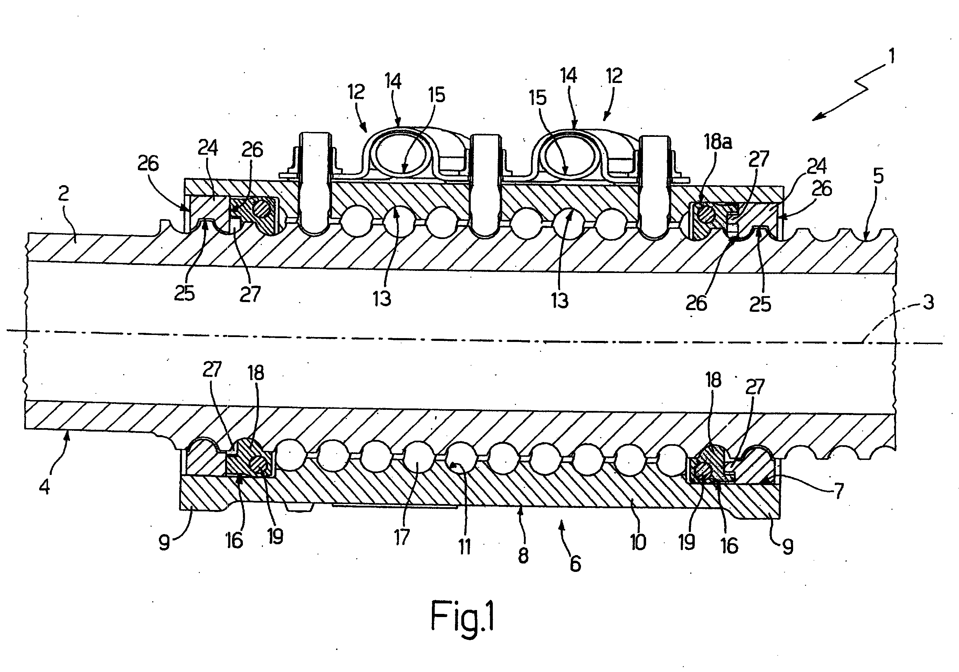

Number 1 in Figure 1 indicates as a whole a ball screw comprising a substantially cylindrical shaft 2, which is made of metal, has a given longitudinal axis 3, is defined externally by a cylindrical surface 4 coaxial with axis 3, and has a single thread 5 formed on surface 4 and extending in a spiral about axis 3.

Screw 1 also comprises a tubular spiral casing 6, which is made of metal, is fitted to shaft 2, is defined internally and externally by respective substantially cylindrical surfaces 7 and 8 coaxial with each other and with axis 3, and has two wide lateral portions 9, and a narrow central portion 10 located between portions 9.

Casing 6 comprises, at portion 10, an internal thread 11 of the same hand as thread 5, and, in the example shown, has two races 12 located successively along axis 3, and looped along and about axis 3. Each race 12 comprises an inner portion 13 defined by thread 11, and an outer portion 14 defined by a conduit 15 fixed to surface 8, and is engaged by a set of balls (not shown).

Each portion 9 houses an annular seal 16, which is coaxial with axis 3, is located between shaft 2 and casing 6 in a position facing portion 10, and defines, together with shaft 2, casing 6, and the other seal 16, a chamber 17 for containing lubricant.

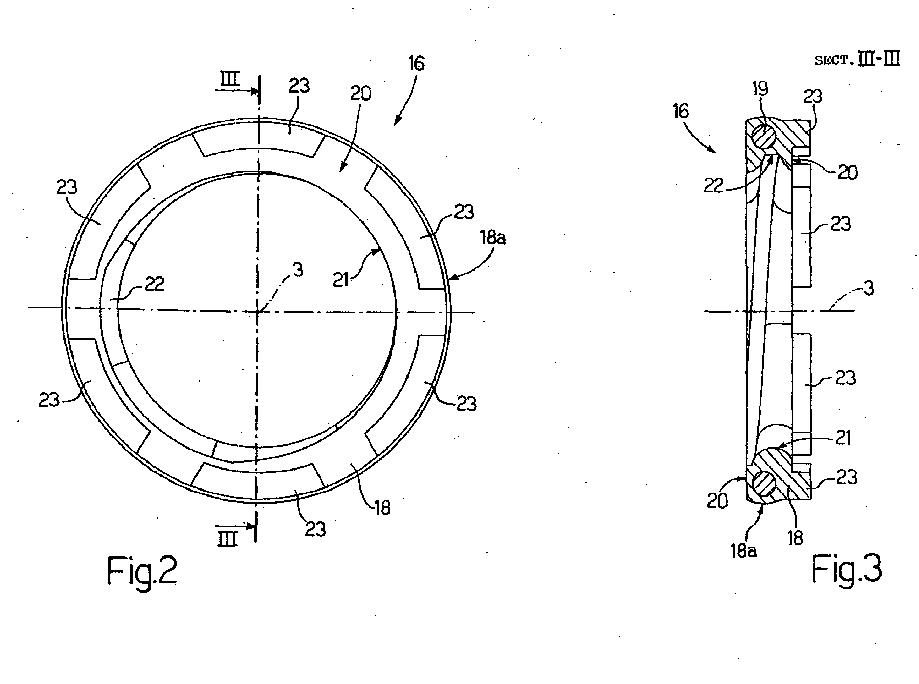

With reference to Figures 2 and 3, each seal 16 comprises an annular member 18 made of plastic material, preferably, through not necessarily, polymer material - in particular, polytetrafluoroethylene; and an annular insert 19, which is located inside member 18, is coaxial with axis 3, has a substantially circular cross section, is made of metal, and therefore has a coefficient of thermal expansion lower than that of member 18 and approximating that of shaft 2 and casing 6.

Member 18 is defined externally by a contoured surface 18a substantially coaxial with axis 3, is defined axially by two flat surfaces 20 substantially perpendicular to axis 3, is defined internally by a surface 21 substantially coaxial with axis 3, and has an internal thread 22 formed on surface 21 and of the same hand as thread 5.

Lubricant is therefore retained inside chamber 17 by surfaces 18a and 21 contacting casing 6 and shaft 2 respectively.

Member 18 also comprises a number of (in the example shown, six) teeth 23, which project axially from one of surfaces 20, are equally spaced about axis 3, and are substantially sector-shaped.

Member 18 is fitted in angularly fixed manner to casing 6 by a cylindrical sleeve 24, which is fitted to shaft 2, on the opposite side of member 18 to portion 10, has a thread 25 formed on its inner surface and of the same hand as thread 5, and is defined axially by two flat surfaces 26 substantially perpendicular to axis 3.

Sleeve 24 is fitted in angularly fixed manner to casing 6 by a number of pins (not shown), which project radially outwards from an outer surface of sleeve 24, and engage corresponding seats (not shown) formed on surface 7 at relative portion 9. Sleeve 24 is also fitted in angularly fixed manner to member 18 by a number of teeth 27, which project axially from one of surfaces 26, are equally spaced about axis 3, are equal in number to teeth 23, are substantially sector-shaped, and each mesh with two respective adjacent teeth 23.

Inserts 19 being made of metal, and therefore of the same type of material as shaft 2 and casing 6, the difference between the coefficient of thermal expansion of seals 16 and that of shaft 2 and casing 6 is relatively small.

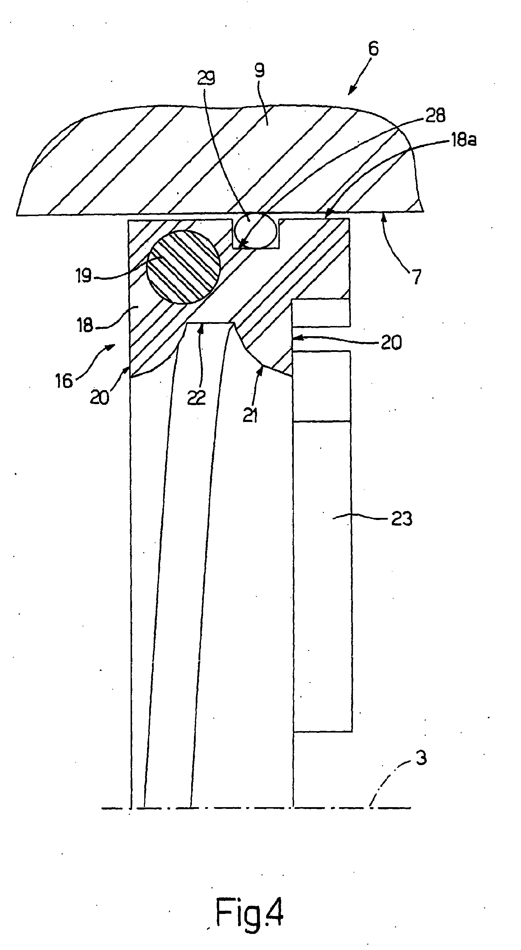

The Figure 4 variation differs from Figures 1-3 solely by surface 18a being substantially cylindrical, and by member 18 comprising an annular recess 28, which is coaxial with axis 3, opens outwards at surface 18a, and houses an O-ring 29 mating in fluidtight manner with casing 6.

## Claims

1. A ball screw comprising a shaft (2) having a given longitudinal axis (3) and an external thread (5); a spiral casing (6) mounted coaxially with said shaft (2); at least one set of balls interposed between the shaft (2) and the casing (6); and two seals (16) fitted, coaxially with said axis (3), between the shaft (2) and the casing (6) to define, together with the shaft (2) and the casing (6), a chamber (17) for containing lubricant; and **characterized in that** each seal (16) comprises an annular member (18) made of a first material having a first coefficient of thermal expansion; and at least one insert (19) located inside said annular member (18) and made of a second material having a second coefficient of thermal expansion lower than said first coefficient.

2. A screw as claimed in Claim 1, wherein said insert (19) is an annular insert.

3. A screw as claimed in Claim 1 or 2, wherein said insert (19) has a substantially circular cross section.

4. A screw as claimed in any one of the foregoing Claims, wherein said first material is a plastic material.

5. A screw as claimed in any one of the foregoing Claims, wherein said first material is a polymer material.

6. A screw as claimed in any one of the foregoing Claims, wherein said second material is a metal material.

7. A screw as claimed in any one of the foregoing Claims, wherein each annular member (18) is defined externally by a surface (18a) substantially coaxial with said axis (3), comprises an annular recess (28) opening outwards at said surface (18a), and has an O-ring (29) housed in said annular recess (28).

8. A screw as claimed in any one of the foregoing Claims, wherein each annular member (18) is defined axially by two surfaces (20) substantially perpendicular to said axis (3), and comprises a number of teeth (23) projecting axially from one of said surfaces (20) and equally spaced about said axis (3).

9. A screw as claimed in Claim 8, wherein each tooth (23) is substantially sector-shaped.

10. A screw as claimed in any one of the foregoing Claims, wherein each annular member (18) has an internal thread (22) of substantially the same hand as the external thread (5).
